## Europäisches Patentamt

## European Patent Office

## Office européen des brevets

(11) Publication number: **0 155 750**
**B1**

(12) **EUROPEAN PATENT SPECIFICATION**

(45) Date of publication of patent specification: **17.10.90**

(51) Int. Cl.⁵: **G 01 K 17/00, F 28 F 27/00**

(21) Application number: **85300475.2**

(22) Date of filing: **24.01.85**

(54) Cooling tower monitors.

(30) Priority: **23.03.84 US 592504**

(43) Date of publication of application:
**25.09.85 Bulletin 85/39**

(45) Publication of the grant of the patent:
**17.10.90 Bulletin 90/42**

(84) Designated Contracting States:
**DE FR GB IT**

(56) References cited:
**EP-A-0 030 459**
**EP-A-0 115 377**
**GB-A-2 063 364**
**US-A-4 325 223**

(73) Proprietor: **INTERNATIONAL CONTROL AUTOMATION FINANCE S.A.**
**16 Rue des Bains**
**Ville de Luxembourg (LU)**

(72) Inventor: **Kaya, Azmi**
**2365 Woodpark Road**
**Akron Ohio 44313 (US)**
Inventor: **Sommer, Alan**
**7322 Taft Street**
**Mentor Ohio 44060 (US)**

(74) Representative: **Cotter, Ivan John et al**
**D. YOUNG & CO. 10 Staple Inn**
**London WC1V 7RD (GB)**

Courier Press, Leamington Spa, England.

# EP 0 155 750 B1

**Description**

This invention relates to determining the performance of cooling towers.

Cooling towers are steady-flow devices which are utilised to remove heat from water. Most industrial processes generate waste heat and this heat must be dissipated. Cooling towers use a combination of mass and energy transfer to cold water by exposing the water as an extended surface to the atmosphere. The water surface is extended by filling, which presents a film surface or creates drops due to splashing. The water may also be sprayed to produce droplets. An air flow is established past the water either in a crossflow relationship or in a counter-flow relationship.

The *ASHRAE Equipment Handbook* of 1975 at Chapter 21 describes cooling towers and methods of measuring their performance.

Performance calculations can be achieved only by computers with high level programming languages. The performance calculations cannot be performed by analog devices in an effective manner. "Chiller Plant Energy Conservation Operations" by K. Sinnamohideen and N. Olmstead discloses the use of digital computers for calculating performance of a cooling tower. An article by K. Cooper of York Division of Borg-Warner Corp. entitled "Utilizing Water Chillers Efficiently" implies the performance of calculations to obtain a cooling tower performance value, but it is assumed that these calculations would also be performed utilising a computer with high level programming language.

Currently, there are no effective tools for monitoring cooling tower performance except for computers. Computers, however, require high level language which takes a relatively long period of time for processing and also require highly trained personnel for their operation. This results in high cost.

Our European Patent Application Publication No. EP—A—0 115 377 relates to a system for controlling the operation of a cooling tower. Some of the specific disclosure appearing hereinafter appears also in EP—A—0 115 377. EP—A—0 115 377 was published on 8 August 1984 and forms part of the state of the art as regards the present application only by virtue of Article 54(3) of the European Patent Convention.

UK Patent Application No. GB—A—2 063 364 discloses a cooling tower having airflow means in the form of a fan for producing an air flow through the tower. GB—A—2 063 364 is not concerned with determining the performance of the cooling tower. Rather, it is concerned with controlling the operation of the tower by controlling the speed of the fan. The speed of the fan is controlled in accordance with a measurement of cooling water temperature. The wet bulb temperature of air outside of the tower may also be used to effect control.

EP—A—0 030 459 discloses a heat exchange arrangement comprising: a heat exchanger having a hot water inlet and a cold water outlet; a first temperature transmitter for supplying a signal corresponding to the cold water outlet temperature; a second temperature transmitter for supplying a signal corresponding to the hot water inlet temperature; a water flow transmitter for supplying a signal corresponding to the water flow rate; and performance evaluation means responsive to a plurality of signals, including said signals corresponding to the cold water outlet temperature, hot water inlet temperature and water flow rate, to determine the performance of the heat exchanger.

In EP—A—0 030 459, the heat exchanger is a (steam) condenser (or other heat exchanger having tubes). The signals supplied to the performance evaluation means comprise, as well as the three signals mentioned above, a signal corresponding to a temperature differential, signals produced by heat flow sensors, a condenser vacuum (pressure) signal, and a condenser steam temperature. The performance evaluation means is a programmed computer responsive to the various signals to calculate the cleanliness of cooling water tubes of the condenser and to monitor the performance of the condenser with special reference to the cleanliness of the cooling water tubes of the condenser.

According to the invention there is provided a heat exchange arrangement comprising:

a heat exchanger having a hot water inlet and a cold water outlet;

a first temperature transmitter for supplying a signal corresponding to the cold water outlet temperature;

a second temperature transmitter for supplying a signal corresponding to the hot water inlet temperature;

a water flow transmitter for supplying a signal corresponding to the water flow rate; and

performance evaluation means responsive to a plurality of signals, including said signals corresponding to the cold water outlet temperature, hot water inlet temperature and water flow rate, to determine the performance of the heat exchanger;

characterised in that:

the heat exchanger is a cooling tower;

airflow means is provided for producing an air flow through the tower;

an air flow transmitter is provided for supplying a signal corresponding to the flow of air through the tower;

wet bulb temperature means is provided for supplying a signal corresponding to the wet bulb temperature of air outside of the tower;

the water flow transmitter is operative to supply said signal corresponding to the actual flow of water out of the tower; and

the performance evaluation means comprises

2

available water flow means operative to calculate a signal corresponding to available flow of water from the tower as a function of a rating factor and tower unit at standard conditions, as well as said signals corresponding to the cold water outlet temperature, the hot water inlet temperature, the flow of air through the tower and the wet bulb temperature of air outside of the tower, and

a performance value generator responsive to said signal corresponding to available flow of water from the tower and to said signal corresponding to the actual flow of water out of the tower to calculate a performance value of the tower as a function of the available and actual water flows out of the tower.

The arrangement of the invention thus enables the performance of a cooling tower to be determined.

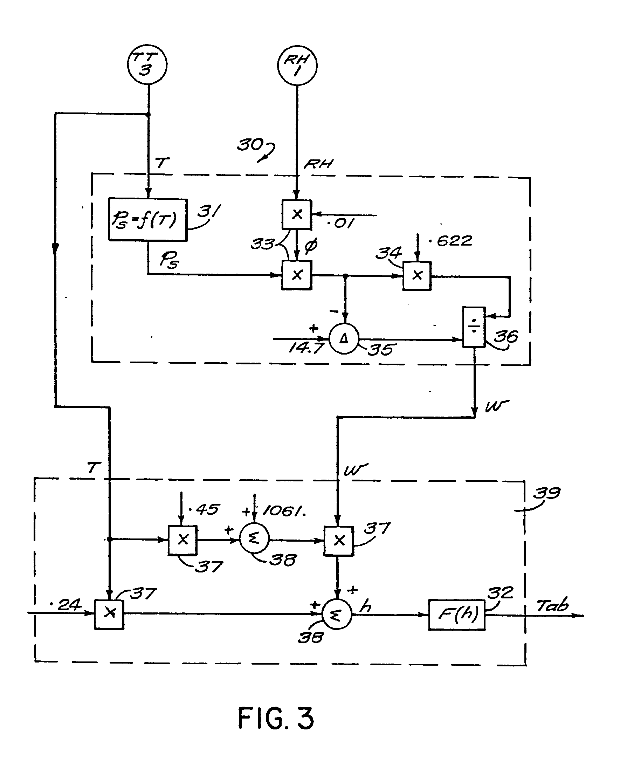

The arrangement is such that the performance determination (which involves the calculation—as set forth above—of the signal corresponding to the available (theoretical) flow of water, and the calculation of the performance value as a function of the available flow and the actual flow) can readily be implemented in the form of a plurality of simple function blocks interconnected in an appropriate manner to achieve the performance calculations, whereby the use of a computer (and a high level language) can be avoided. Thus, in a preferred embodiment of the invention described below, a cooling monitor is provided which implements the available water flow means from a plurality of function generators, a plurality of multipliers and a division unit (see Claim 3), and which implements the performance value generator in the form of another division unit (see Claim 4). (The cooling monitor of the preferred embodiment also comprises the calculating module of Claim 2, which again is formed from interconnected function blocks: see Figure 3). This all results in a low cost and high speed mechanism for monitoring the cooling tower performance. Essentially, the advantages of analog devices and computers are combined according to the monitor of the preferred embodiment. In other words, the monitor of the preferred embodiment utilises simple function blocks and a plurality of parameter transmitters to generate a performance value for the tower.

The monitor of the preferred embodiment is simple in design, rugged in construction and economical to manufacture.

The invention will now be further described, by way of illustrative and non-limiting example, with reference to the accompanying drawings, in which:

Figure 1 is a schematic representation of the above-mentioned preferred embodiment of the invention, which comprises a cooling tower with parameter transmitters and a modular performance calculator (cooling tower monitor) for monitoring the performance of the cooling tower;

Figure 2 is a block diagram showing the overall cooling tower monitor;

Figure 3 is a block diagram showing a logic circuit for generating a wet bulb temperature for use in calculating a theoretical or available water flow through the cooling tower;

Figures 4, 5 and 6 are graphs illustrating the quantities of approach, range and wet bulb temperature of air for the cooling tower; and

Figures 7 and 8 are graphs showing the relationship of outside temperature to evaporation pressure of water and enthalpy or energy content to wet bulb temperature for use in the block diagram of Figure 3.

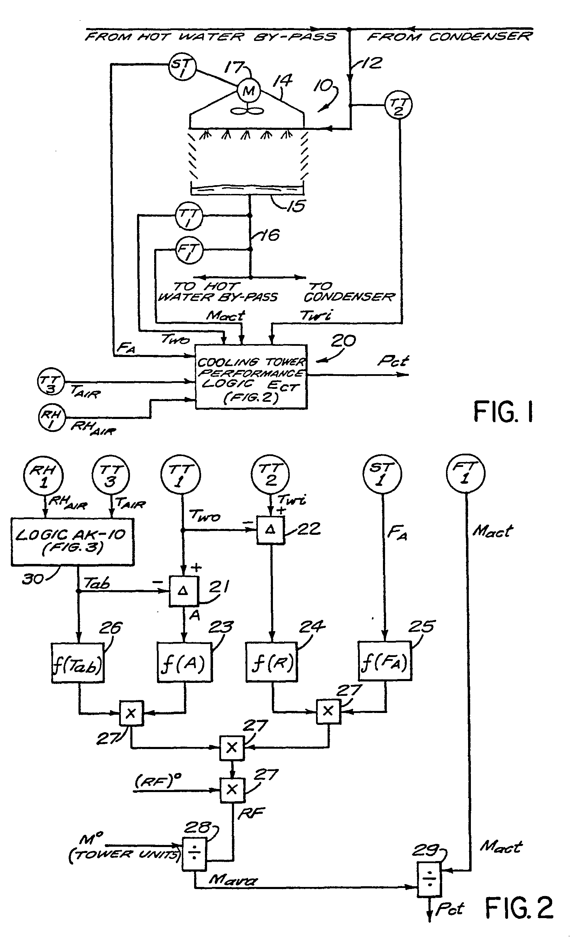

Figure 1 shows a cooling tower monitor 20 for a cooling tower 10. The cooling tower 10 is provided with hot water on a hot-water inlet 12. As shown, hot water can be provided from a hot water by-pass or from a condenser of an industrial process or heat exchanger. The water is sprayed down through a housing 14 of a heat exchanger and collected in a pan 15 from which it is supplied through a cold water outlet 16 back to the hot-water by-pass or condenser. A cross flow of air is established by a blower having a motor and fan 17. A first temperature transmitter TT1 is connected to the cold water outlet 16 for transmitting a signal corresponding to the temperature of water leaving the cooling tower 10. A flow transmitter FT1 is connected to the outlet 16 for generating a value corresponding to the actual flow of water out of the tower 10. A second temperature transmitter TT2 generates a signal corresponding to the input water temperature at the inlet 12. A third temperature transmitter TT3 generates a value corresponding to the surrounding or outside air temperature and a relative humidity transmitter RH1 generates a value corresponding to the surrounding relative humidity of the air outside of the tower. Finally, a speed transmitter ST1 is connected to the motor and fan combination 17 and generates a signal ($F_A$) corresponding to the flow of air through the cooling tower 10.

The monitor 20 receives the signals from the transmitters and generates a value $P_{ct}$ corresponding to the performance of the cooling tower 10.

The purpose of the cooling tower monitor 20 is to determine the ability of the tower to provide its expected performance.

The equivalent area to cool a flow of water at standard conditions of 3.785 l/m (one US gallon per minute or "1 gpm") is called "1 tower unit". The standard conditions are:

$T_{wi}$=Temperature of entering water=90°F (32.2°C);
$T_{wo}$=Temperature of leaving water=80°F (26.7°C); and
$T_{ab}$=Wet bulb temperature of air=70°F (21.2°C).

If the cooling tower delivers M gpm of water at standard conditions, then the tower has a rating of "M tower units". Industry uses the flow rate of water, M gpm, at standard conditions as the performance capability, which is the same as the "tower unit".

Two other terms are used which are related to temperature:

$$A = \text{Approach} = T_{wo} - T_{ab} \tag{1}$$

and

$$R = \text{Range} = T_{wl} - T_{wo} \tag{2}$$

The standard conditions dictate that:

$$A° = 80 - 70 = 10 \text{ deg F (5.5 deg C)} \tag{3}$$

$$R° = 90 - 80 = 10 \text{ deg F (5.5 deg C)} \tag{4}$$

The performance of the cooling tower is measured not at various temperature conditions, but rather at standard conditions. The correction is made by the "rating factor" (RF), to find the performance at standard conditions. The Rating Factor is found from rating charts given by the *ASHRAE Equipment Handbook* at Chapter 21. Rating factor is presented as a function of Range and Approach, for a given wet bulb temperature of air.

ASHRAE charts are for a given air flow through the tower. In the development here, airflow is varied for optimisation and will be taken as an independent variable. Then,

$$RF = f(R, A, T_{ab}, F_a) \tag{a}$$

a nonlinear function, can be written. Describing RF about a reference point $(RF)°$, in terms of functional variations, f, of each variable

$$RF = (RF)° \; [f_R(R)] \; [f_A(A)] \; [f_T(T_{ab})] \; [f_F(F_A)] \tag{6}$$

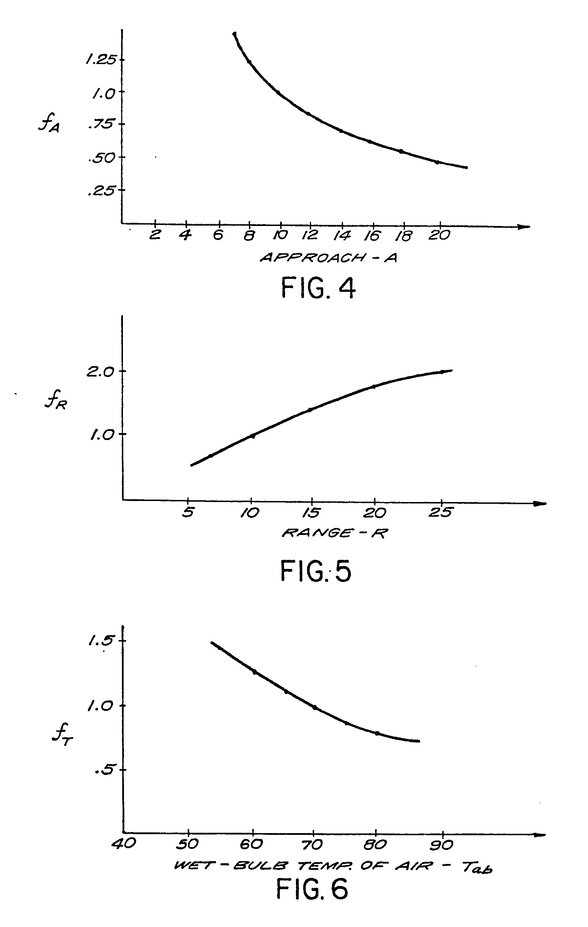

can be written. Since $(RF)° = 1$, the values of $f_R$, $f_A$, $f_T$ can be taken from ASHRAE charts directly. These functional relations are plotted in Figures 4, 5 and 6. The values $f_F$ can be taken as:

$$f_F(F_A) = \left( \frac{F_A}{F_A°} \right)^{.9} \tag{7}$$

However, the manufacturer's data should be used if possible:

The Cooling Tower Performance Factor $(P_{ct})$ is similar to a fouling factor for a heat exchanger. The performance factor of the cooling tower is defined as:

$$P_{ct} = \left[ \frac{\text{Actual flow}}{\text{Available flow}} \right]_{std} = \frac{M_{act}}{M_{ava}} \tag{8}$$

measured at standard conditions. The "RF" values are used to find $P_{ct}$. The procedure is as follows:

1. Measure $T_{ab}$, $T_{wo}$, $T_{wi}$, $F_A$ to get A and R;
2. Find $f_R$, $R_A$, $F_T$, $f_F$, to determine RF;
3. For known Tower Units or M° find $M_{ava}$ from:

$$M_{ava} = \frac{\text{Tower units}}{RF} = \frac{M°}{RF} \tag{9}$$

and

4. Measure $M_{act}$ and find $P_{ct}$ from equation (8).

Turning to Figure 2, a logic block 30 is utilised to calculate the wet bulb temperature of air $T_{ab}$ as a function of the surrounding air temperature T and surrounding relative humidity RH as supplied by the transmitters TT3 and RH1. Details of the logic circuit 30 are shown in Figure 3 and will be discussed later.

A first comparator or subtraction unit 21 subtracts the wet bulb temperature $T_{ab}$ from the output temperature $T_{wo}$ which is supplied by the temperature transmitter TT1 to obtain the value for the approach A. A second comparator or subtraction unit 22 is connected between the first and second temperature transmitters TT1 and TT2 to generate the range R. The speed transmitter ST1 provides an air flow value directly to a function generator 25. Outputs of the logic circuit 30, first comparator 21 and second comparator 22 are connected, respectively, to function generators 26, 23 and 24.

The function blocks 23, 24 and 26 generate the functions illustrated in Figures 4, 5 and 6, respectively. The function block 25 performs the function calculation of Equation (7). Multipliers 27 are connected to outputs of the function blocks 23 to 26 and also to a value line for providing the $(RF)°$ to generate the rating factor RF for the cooling tower. This value divides the tower units M° in a divider 28 to obtain the available

# EP 0 155 750 B1

or theoretical flow value $M_{ava}$. This value is divided into the actual flow $M_{act}$ in a further divider 29 to obtain the performance value $P_{ct}$.

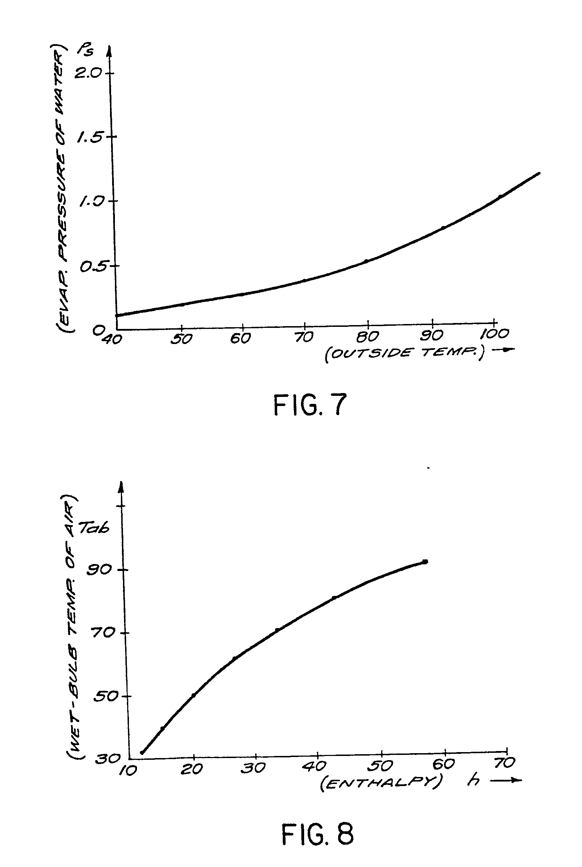

In the logic circuit 30 illustrated in Figure 3, function generators 31 and 32 generate functions of temperature and enthalpy or energy content illustrated in Figures 7 and 8, respectively.

The operation of Figure 3 is explained in greater detail in our above-cited European Patent Application Publication No. EP—A—0 115 377.

A function block 31 is connected to the surrounding air temperature transmitter TT3 and generates a value $P_s$ corresponding to the evaporation pressure of water at the surrounding temperature T. Multipliers 33 are utilised in conjunction with the relative humidity transmitter RH1 and the function block 31 to obtain a value corresponding to the partial pressure of moisture. A multiplier 34 and a difference unit or comparator 35 are then utilised to provide values to a division unit 36 which generates a value w which represents the moisture ratio of the outside air, i.e. the pounds (kg) of moisture per pound (kg) of dry air.

The outside temperature T and the moisture ratio w are supplied to a second portion 39 of the logic module 30 and are used in conjunction with multipliers 37 and summing units 38 as well as the function generator 32 to generate the wet bulb air temperature $T_{ab}$.

## Claims

1. A heat exchange arrangement comprising:

a heat exchanger (10) having a hot water inlet (12) and a cold water outlet (16);

a first temperature transmitter (TT1) for supplying a signal corresponding to the cold water outlet temperature $(T_{wo})$;

a second temperature transmitter (TT2) for supplying a signal corresponding to the hot water inlet temperature $(T_{wi})$;

a water flow transmitter (FT1) for supplying a signal $(M_{act})$ corresponding to the water flow rate; and

performance evaluation means (23—29) responsive to a plurality of signals, including said signals corresponding to the cold water outlet temperature, hot water inlet temperature and water flow rate, to determine the performance of the heat exchanger (10);

characterised in that:

the heat exchanger (10) is a cooling tower;

airflow means (17) is provided for producing an air flow through the tower (10);

an air flow transmitter (FT1) is provided for supplying a signal $(F_A)$ corresponding to the flow of air through the tower (10);

wet bulb temperature means (RH1, TT3, 30) is provided for supplying a signal corresponding to the wet bulb temperature $(T_{ab})$ of air outside of the tower (10);

the water flow transmitter (FT1) is operative to supply said signal corresponding to the actual flow of water $(M_{act})$ out of the tower (10); and

the performance evaluation means (23—29) comprises

available water flow means (23—28) operative to calculate a signal corresponding to available flow of water $(M_{ava})$ from the tower (10) as a function of a rating factor (RF) and tower unit (M) at standard conditions, as well as said signals corresponding to the cold water outlet temperature $(T_{wo})$, the hot water inlet temperature $(T_{wi})$, the flow of air $(F_A)$ through the tower and the wet bulb temperature $(T_{ab})$ of air outside of the tower, and

a performance value generator responsive to said signal corresponding to available flow of water $(M_{ava})$ from the tower (10) and to said signal corresponding to the actual flow of water $(M_{act})$ out of the tower to calculate a performance value $(P_{ct})$ of the tower as a function of the available and actual water flows out of the tower.

2. A heat exchange arrangement according to claim 1, wherein the wet bulb temperature means (RH1, TT3, 30) comprises a third temperature transmitter (TT3) for generating a signal corresponding to a temperature outside of the tower (10), a relative humidity transmitter (RH1) for generating a signal corresponding to the relative humidity outside of the tower (10), and a calculating module (30) connected to the third temperature transmitter (TT3) and the relative humidity transmitter (RH1) for calculating the signal corresponding to the wet bulb temperature $(T_{ab})$ of air outside of the tower (10).

3. A heat exchange arrangement according to claim 1 or claim 2, wherein the cooling tower (10) has an approach value (A) and a range value (R) as well as the standard condition tower unit (M) and rating factor (RF), and wherein the available water flow means (23—28) comprises:

a first function generator (23) connected to the first temperature transmitter (TT1) and the wet bulb temperature means (30) for calculating the actual approach (A) of the tower (10) as a difference between the wet bulb temperature $(T_{ab})$ and the cold water outlet temperature $(T_{wo})$ of the tower;

a second function generator (24) connected to the first and second temperature transmitters (TT1, TT2) for generating an actual range (R) of the tower as a function of the difference between the outlet and inlet water temperatures $(T_{wo}, T_{wi})$ of the tower;

a third function generator (25) connected to the air flow transmitter (ST1) for generating a function of the air flow;

5

a fourth function generator (26) connected to the wet bulb temperature means (30) for generating a function of the wet bulb temperature $(T_{ab})$;

a first multiplier (27) connected to the first and fourth function generators (23, 26) for multiplying the outputs thereof;

a second multiplier (27) connected to the second and third function generators (24, 25) for multiplying the outputs thereof;

a third multiplier (27) connected to the first and second multipliers (27) for multiplying the outputs thereof;

a fourth multiplier (27) connected to the third multiplier (27) for multiplying the output of the third multiplier by the standard condition rating factor (RF) of the cooling tower; and

a division unit (28) connected to the fourth multiplier (27) for dividing the standard condition tower unit of the tower by the output of the fourth multiplier to generate the signal corresponding to the available water flow $(M_{ava})$ from the cooling tower (10).

4. A heat exchange arrangement according to claim 3, wherein the performance value generator comprises a further division unit (29) connected to the first-mentioned division unit (20) and to the water flow transmitter (FTI) for dividing the actual water flow $(M_{act})$ by the available water flow $(M_{ava})$ to generate the performance value $(P_{ct})$.

**Patentansprüche**

1. Wärmetauscheranordnung mit:

einem Wärmetauscher (10), welcher einen Heißwassereinlaß (12) und einen Kaltwasserauslaß (16) hat, einem ersten Temperaturmelder (TT1) zum Bereitstellen eines Signals, welches der Kaltwasserauslaßtemperatur $(T_{wo})$ entspricht,

einem zweiten Temperaturmelder (TT2) für die Bereitstellung eines Signals, welches der Heißwassereinlaßtemperatur $(T_{wl})$ entspricht,

einem Wasserstrommelder (FT1) zum Bereitstellen eines Signals $(M_{act})$, welches der Wasserströmungsrate entspricht, und

einer Wirksamkeitsauswerteinrichtung (23—29), welche auf eine Mehrzahl von Signalen anspricht, einschließlich der Signale, welche der Kaltwasserauslaßtemperatur, der Heißwassereinlaßtemperatur und der Wasserstromungsrate entsprechen, um die Wirksamkeit des Wärmetauschers (10) zu bestimmen, dadurch gekennzeichnet, daß

der Wärmetauscher ein Kühlturm ist,

eine Luftströmeinrichtung (17) zum Erzeugen eines Luftstromes durch den Turm (10) vorgesehen ist,

ein Luftsstrommelder (FT1) vorgesehen ist, um ein Signal $(F_A)$ bereitzustellen, welches dem Luftstrom durch den Turm (10) entspricht,

eine Verdunstungstemperatureinrichtung (RH1, TT3, 30) vorgesehen ist, um ein Signal bereitzustellen, welches der Verdunstungstemperatur $(T_{ab})$ der Luft außerhalb des Turmes (10) entspricht,

der Wasserstrommelder (FT1) so betreibbar ist, daß er ein Signal bereitstellt, welches dem jeweiligen Wasserstrom $(M_{act})$ aus dem Turm (10) entspricht, und

die Wirksamkeitsermittlungseinrichtung (23—29) eine Einrichtung (23—28) für den verfügbaren Wasserstrom aufweist, welche so betreibbar ist, daß sie ein Signal, welches dem verfügbaren Wasserstrom $(M_{ava})$ aus dem Turm (10) entspricht, als Funktion eines Betriebswertfaktors (RF) und der Turmeinheit (M) bei Standardbedingungen berechnet, ebenso wie die Signale, welche der Kaltwasserauslaßtemperatur $(T_{wo})$, der Warmwassereinlaßtemperatur $(T_{wl})$, des Luftstromes $(F_A)$ durch den Turm und der Verdunstungstemperatur $(T_{ab})$ der Luft außerhalb des Turmes entsprechen, und

einen Wirksamkeitswertgenerator aufweist, welcher auf das Signal anspricht, welches dem verfügbaren Wasserstrom $(M_{ava})$ aus dem Turm (10) entspricht, und auf das Signal, welches dem tatsächlichen Wasserstrom $(M_{act})$ aus dem Turm entspricht, um einen Wirksamkeitswert $(P_{ct})$ des Turmes als Funktion der verfügbaren und der tatsächlichen Wasserströme aus dem Turm zu berechnen.

2. Wärmeaustauscheranordnung nach Anspruch 1, wobei die Verdunstungstemperatureinrichtung (RH1, TT3, 30) einen dritten Temperaturmelder (TT3) zum Erzeugen eines Signales aufweist, welches einer Temperatur außerhalb des Turmes (10) entspricht, einen Melder (RH1) für die relative Feuchtigkeit aufweist, um ein Signal zu erzeugen, welches der relativen Feuchtigkeit außerhalb des Turmes (10) entspricht, und einen Berechnungsmodul (30) aufweist, welcher mit dem dritten Temperaturmelder (TT3) und dem Melder (RH1) für die relative Feuchtigkeit verbunden ist, um ein Signal zu berechnen, welches der Verdunstungstemperatur $(T_{ab})$ der Luft außerhalb des Turmes (10) entspricht.

3. Wärmeaustauscheranordnung nach Anspruch 1 oder 2, wobei der Kühlturm (10) einen Näherungswert (A) und einen Bereichswert (R) ebenso wie eine Turmeinheit unter Standardbedingungen sowie einen Betriebswertfaktor hat, und wobei die Einrichtung (23—28) für verfügbaren Wasserstrom aufweist:

einen ersten Funktionsgenerator (23), welcher mit dem ersten Temperaturmelder (TT1) und der Verdunstungstemperatureinrichtung (30) verbunden ist, um die tatsächliche Annäherung (A) des Turmes (10) als Differenz zwischen der Verdunstungstemperatur $(T_{ab})$ und der Kaltwasserauslaßtemperatur $(T_{wo})$ des Turmes zu berechnen,

einen zweiten Funktionsgenerator (24), der mit den ersten und zweiten Temperaturmeldern (TT1, TT2) verbunden ist, um einen aktuellen Bereich (R) des Turmes als Funktion der Differenz zwischen der Auslaß- und der Einlaßwassertemperatur ($T_{wo}$, $T_{wi}$) des Turmes zu erzeugen,

einen dritten Funktionsgenerator (25), welcher mit dem Luftstrommelder (ST1) zum Erzeugen einer Funktion des Luftstromes verbunden ist,

einen vierten Funktionsgenerator (26), welcher mit der Verdunstungstemperatureinrichtung (30) verbunden ist, um eine Funktion der Verdunstungstemperatur ($T_{ab}$) zu erzeugen,

einen ersten Vervielfacher (27), welcher mit dem ersten und dem vierten Funktionsgenerator (23, 26) verbunden ist, um deren Ausgangswerte zu multiplizieren,

einen zweiten Vervielfacher (27), welcher mit dem zweiten und dritten Funktionsgenerator (24, 25) verbunden ist, um deren Ausgangswerte zu multiplizieren,

einen dritten Vervielfacher (27), welcher mit dem ersten und dem zweiten Multiplizierer (27) verbunden ist, um deren Ausgang zu multiplizieren,

einen vierten Vervielfacher (27), welcher mit dem dritten Vervielfacher (27) verbunden ist, um den Ausgang des dritten Vervielfachers mit dem Betriebswert (RF) des Kühlturmes unter Standardbedingungen zu multiplizieren, und

eine Divisionseinheit (28), welche mit dem vierten Vervielfacher (27) verbunden ist, um die Turmeinheit unter Standardbedingungen des Turmes durch den Ausgabewert des vierten Vervielfachers zu dividieren, um das Signal zu erzeugen, welches dem verfügbaren Wasserstrom ($M_{ava}$) aus dem Kühlturm (10) entspricht.

4. Wärmeaustauscheranordnung nach Anspruch 3, wobei der Wirksamkeitswertgenerator eine weitere Dividiereinheit (29) aufweist, welche mit der erst erwähnten Dividiereinheit (20) und dem Wasserstrommelder (FT1) verbunden ist, um den tatsächlichen Wasserstrom ($M_{act}$) durch den verfügbaren Wasserstrom ($M_{ava}$) zu dividieren, um den Wirksamkeitswert ($P_{ct}$) zu erzeugen.

## Revendications

1. Disposition d'échange thermique comprenant:

un échangeur thermique (10) comportant une arrivée d'eau chaude (12) et une sortie d'eau froide (16),

un premier transmetteur de température (TT1) pour délivrer un signal correspondant à la température de sortie d'eau froide ($T_{wo}$),

un deuxième transmetteur de température (TT2) pour délivrer un signal correspondant à la température d'arrivée d'eau chaude ($T_{wi}$),

un transmetteur d'écoulement d'eau (FT1) pour délivrer un signal ($M_{act}$) correspondant à la vitesse d'écoulement d'eau, et

un moyen d'évaluation de rendement (23 à 29) réagissant à une pluralité de signaux, comprenant lesdits signaux correspondant à la température de sortie d'eau froide, à la température d'arrivée d'eau chaude et à la vitesse d'écoulement d'eau, afin de déterminer le rendement de l'échangeur thermique (10), caractérisé en ce que:

l'échangeur thermique (10) est une tour de refroidissement,

un moyen d'écoulement d'air (17) est prévu pour produire un écoulement d'air à travers la tour (10),

un transmetteur d'écoulement d'air (FT1) est prévu pour délivrer un signal ($F_A$) correspondant à l'écoulement de l'air à travers la tour (10),

un moyen de température au thermomètre mouillé (RH1, TT3, 30) est prévu pour délivrer un signal correspondant à la température au thermomètre mouillé ($T_{ab}$) de l'air extérieur de la tour (10),

le transmetteur d'écoulement d'eau (FT1) est actif pour délivrer ledit signal correspondant à l'écoulement effectif d'eau ($M_{act}$) hors de la tour (10), et

le moyen d'évaluation de rendement (23 à 29) comprend:

un moyen d'écoulement d'eau disponible (23 à 28) actif pour calculer un signal correspondant à l'écoulement d'eau disponible ($M_{ava}$) en provenance de la tour (10) comme une fonction du facteur de productivité (RF) et l'unité de tour (M) aux conditions type, de même que lesdits signaux correspondant à la température de sortie d'eau froide ($T_{wo}$), la température d'arrivée d'eau chaude ($T_{wi}$), l'écoulement d'air ($F_A$) à travers la tour et la température au thermomètre mouillé ($T_{ab}$) de l'air extérieur de la tour (10), et

un générateur de valeur de rendement réagissant audit signal correspondant à l'écoulement d'eau disponible ($M_{ava}$) en provenance de la tour (10) et audit signal correspondant à l'écoulement d'eau effectif ($M_{act}$) hors de la tour afin de calculer une valeur de rendement ($P_{ct}$) de la tour comme une fonction des écoulements d'eau disponibles effectifs hors de la tour.

2. Disposition d'échange thermique selon la revendication 1, dans laquelle le moyen de température au thermomètre mouillé (RH1, TT3, 30) comprend un troisième transmetteur de température (TT3) pour générer un signal correspondant à une température extérieure de la tour (10), un transmetteur d'humidité relative (RH1) pour générer un signal correspondant à l'humidité relative extérieure de la tour (10) et un module de calcul (30) pour relier au troisième transmetteur de température (TT3) et au transmetteur d'humidité relative (RH1) pour calculer le signal correspondant à la température au thermomètre mouillé ($T_{ab}$) de l'air extérieur de la tour (10).

3. Disposition d'échange thermique selon la revendication 1 ou 2, dans laquelle la tour de refroidissement (10) a une valeur d'approximation (A) et une valeur de domaine (R) de même que l'unité de tour (M) et le facteur de productivité (RF) aux conditions type et dans laquelle le moyen d'écoulement d'eau disponible (23 à 28) comprend:

un premier générateur de fonction (23) relié au premier transmetteur de température (TT1) et le moyen de température au thermomètre mouillé (30) pour calculer l'approximation effective (A) de la tour (10) comme la différence entre la température au thermomètre mouillé ($T_{ab}$) et la température extérieure d'eau froide ($T_{wo}$) de la tour,

un deuxième générateur de fonction (24) relié aux premier et deuxième transmetteur de température (TT1, TT2) pour générer un domaine effectif (R) de la tour comme une fonction de la différence entre les températures d'eau de sortie et d'arrivée ($T_{wo}$, $T_{wi}$) de la tour,

un troisième générateur de fonction (25) relié au transmetteur d'écoulement d'air (ST1) pour générer une fonction de l'écoulement d'air,

un quatrième générateur de fonction (26) relié au moyen de température au thermomètre mouillé (30) pour générer une fonction de la température au thermomètre mouillé ($T_{ab}$),

un premier multiplicateur (27) relié aux premier et quatrième générateurs de fonction (23, 26) pour multiplier les sorties de ceux-ci,

un deuxième multiplicateur (27) relié aux deuxième et troisième générateurs de fonction (24, 25) pour multiplier les sorties de ceux-ci,

un transistor multiplicateur (27) relié aux premier et deuxième multiplicateurs (27) pour multiplier les sorties de ceux-ci,

un quatrième multiplicateur (27) relié au troisième multiplicateur (27) pour multiplier la sortie du troisième multiplicateur par le facteur de productivité aux conditions type (RF) de la tour de refroidissement, et

une unité de division (28) reliée au quatrième multiplicateur (27) pour diviser l'unité de tour aux conditions type de la tour par la sortie du quatrième multiplicateur afin de générer le signal correspondant à l'écoulement d'eau disponible ($M_{ava}$) provenant de la tour de refroidissement (10).

4. Disposition d'échange thermique selon la revendication 3, dans laquelle le générateur de valeur de rendement comprend une unité de division (29) supplémentaire reliée à l'unité de division (20) mentionnée en premier et au transmetteur d'écoulement d'eau (FT1) pour diviser l'écoulement d'eau effectif ($M_{act}$) par l'écoulement d'eau disponible ($M_{ava}$) afin de générer la valeur de rendement ($P_{ct}$).

FIG. 1

FIG. 2

FIG. 3

$f_A$

1.25
1.0
.75
.50
.25

2   4   6   8   10  12  14  16  18  20

APPROACH - A

FIG. 4

$f_R$

2.0

1.0

5      10      15      20      25

RANGE - R

FIG. 5

$f_T$

1.5

1.0

.5

40     50     60     70     80     90

WET - BULB TEMP. OF AIR - $T_{ab}$

FIG. 6

FIG. 7

FIG. 8